(19) **Europäisches Patentamt / European Patent Office / Office européen des brevets**

(11) **EP 1 129 381 B1**

(12) # EUROPÄISCHE PATENTSCHRIFT

(45) Veröffentlichungstag und Bekanntmachung des Hinweises auf die Patenterteilung:
**28.02.2007 Patentblatt 2007/09**

(21) Anmeldenummer: **00964060.8**

(22) Anmeldetag: **30.08.2000**

(51) Int Cl.:
**G02B 15/173** *(2006.01)*

(86) Internationale Anmeldenummer:
**PCT/EP2000/008436**

(87) Internationale Veröffentlichungsnummer:
**WO 2001/018584 (15.03.2001 Gazette 2001/11)**

(54) **VARIOOBJEKTIV**

VARIABLE LENS

OBJECTIF A FOCALE VARIABLE

(84) Benannte Vertragsstaaten:
**AT BE CH CY DE DK ES FI FR GB GR IE IT LI LU MC NL PT SE**

(30) Priorität: **09.09.1999 DE 19943015**

(43) Veröffentlichungstag der Anmeldung:
**05.09.2001 Patentblatt 2001/36**

(73) Patentinhaber: **CARL ZEISS JENA GmbH**
**07745 Jena (DE)**

(72) Erfinder:
- **WINTEROT, Johannes**
  **07745 Jena (DE)**
- **HÜTTEL, Peter**
  **07745 Jena (DE)**

(56) Entgegenhaltungen:

| | |
|---|---|
| DE-A- 4 315 630 | US-A- 4 240 700 |
| US-A- 4 312 572 | US-A- 4 861 145 |
| US-A- 5 144 488 | US-A- 5 646 790 |
| US-A- 5 699 198 | |

EP 1 129 381 B1

Printed by Jouve, 75001 PARIS (FR)

**Beschreibung**

Die Erfindung bezieht sich auf ein Varioobjektiv mit endlicher Übertragungslänge L von der Objektebene 0 zur Bildebene 0', umfassend drei axial verschiebbare Linsengruppen, von denen in Abbildungsrichtung aufeinander folgend eine erste Linsengruppe positive Brechkraft, eine zweite Linsengruppe negative Brechkraft und die dritte Linsengruppe positive Brechkraft hat.

Je nach Abbildungsaufgabe unterscheidet man zwischen Systemen veränderlicher Maßstabszahl für endliche Übertragungslänge, solchen mit einseitig unendlicher Entfernung und beidseitig unendlicher Entfernung. Derartige Systeme unterscheiden sich bezüglich ihrer Gesetzmäßigkeiten der Dynamik und auch der angestrebten Parameter als Ausdruck der Maßstabszahl und Maßstabszahländerung. Für endliche Übertragungslänge wird das Verhältnis von Bildhöhe zu Objekthöhe, allgemein als Vergrößerung oder Abbildungsmaßstab bezeichnet, als Maßstabszahl benutzt. Für Systeme mit objektseitig unendlicher Eintrittsschnittweite wird üblicherweise die Brennweite angegeben. Systeme mit endlicher objektseitiger Schnittweite und unendlicher Bildlage nutzen die reziproke Brennweite. Für beidseitig an Unendlich grenzende, sogenannte afokale Systeme wird das Verhältnis der Tangenswerte von bildseitigem und objektseitigem Feldwinkel angegeben.

Der grundsätzliche Aufbau optischer Systeme mit variabler Maßstabszahl für verschiedene Abbildungsverhältnisse ist sowohl aus der Fachliteratur als auch aus der Patentliteratur bekannt.

Solche auch als Vario-Systeme bezeichneten Objektive haben zwei Aufgaben zu erfüllen: zum einen die Maßstabszahl zu verändern und zum andern die Fokusschwankung auszugleichen bzw. das Objekt immer scharf auf den Bildort abzubilden.

Die Erfindung bezieht sich auf Systeme mit konstanter endlicher Übertragungslänge. Für derartige Systeme sind stets mindestens zwei axial verschiebliche Linsen bzw. Linsengruppen erforderlich, wobei mit der Axialverschiebung der einen Linsengruppe die Vergrößerung verändert wird und gleichzeitig die zweite Linsengruppe so verschoben werden muß, daß bei unverändertem Bildort die Scharfstellung des Bildes erhalten bleibt. Daraus folgt, daß die Verschiebebewegungen miteinander gekoppelt sein müssen.

Derartige Abbildungssysteme können monochromatisch oder in einem sehr schmalen Spektralbereich eingesetzt werden. Dazu kann es ausreichend sein, die einzelnen Glieder aus einem optischen Medium auszuführen. Sollen weite Spektralbereiche berücksichtigt werden, ist es vorteilhaft, die einzelnen optischen Glieder achromatisch auszuführen. Am einfachsten ist es, ein Gruppe aus zwei Linsen verschiedener Dispersion zusammenzufassen. Im folgenden wird der Begriff "Linsengruppe" auch als Synonym für Linse genutzt. Ist die Anspannung einer Linse zu groß, kann ihre optische Wirkung auf mehrere Glieder aufgespalten werden, die der gleichen Dynamik unterworfen werden. Derartige Aufspaltungen werden von der Erfindung ebenfalls umfaßt.

Für Variosysteme mit endlicher Übertragungslänge sind die Kenntnis der Brechkraftverteilung und der Dynamik für den Optikdesigner ausreichend, um das System der jeweiligen Abbildungsaufgabe anpassen zu können. Bezüglich Bildfeld, Spektralbereich, Auflösung und geometrischen Randbedingungen kann die Feinabstimmung erfolgen. Untergeordnet sind die Reihenfolge von sammelnden und zerstreuenden Teilen in den einzelnen Gruppen und die Wahl der optischen Medien.

Ein Vario-System mit endlicher Übertragungslänge L ist beispielsweise beschrieben in Boegehold "Das optische System des Mikroskops", Verlag Technik Berlin 1958, Seite 66 ff. Das hier dargestellte System besteht in Abbildungsrichtung betrachtet aus einer Linse positiver, einer Linse negativer und wiederum einer Linse positiver Brechkraft. Die erste und dritte Linse sind fest miteinander gekoppelt und werden gemeinsam verschoben. Die zweite Linse ist ortsfest angeordnet. Für die Ausschöpfung der möglichen Vergrößerungsänderung von -0,3 bis -3,0 bei diesem System wird eine Fokusschwankung von 1,5mm angegeben. Bei den angegebenen gemeinsamen nur linearen Bewegungen der Linsen spricht man von optischem Ausgleich.

Daneben sind Systeme mit mechanischem Ausgleich der Bildschärfenabweichung bekannt. Es gibt Ausführungen, bei denen die vordere oder hintere Linse mit positiver Brechkraft feststeht und die verbleibenden Glieder mit großer Dynamik zueinander bewegt werden. Ein System mit geringerer Dynamik des mechanischen Ausgleichs ist in DE 43 15 630 A1 beschrieben. Hier sind ebenfalls eine erste Linsengruppe mit positiver Brechkraft, eine zweite Linsengruppe mit negativer Brechkraft und eine dritte Linsengruppe mit positiver Brechkraft genutzt. Die erste und dritte Linsengruppe sind axial verschiebbar, wobei aber die dritte Linsengruppe eine bezüglich der ersten Linsengruppe nichtlineare Bewegung ausführt. Die Auslösung und Steuerung der Verschiebebewegung der Komponenten erfolgt auch hierbei über Kurven. Dieser letztgenannten Gattung von Vario-Systemen ist die nachfolgend beschriebene Erfindung zuzuordnen.

Die US 4 240 700 offenbart ein Varioobjektiv nach dem Oberbegriff des Anspruchs 1.

Der Erfindung liegt die Aufgabe zugrunde, ein Varioobjektiv der eingangs beschriebenen Art so weiterzubilden, daß bei weiter vereinfachtem Aufbau die Fokusschwankung auch für große Übertragungslängen L und weite Vergrößerungsbereiche gering gehalten wird.

Erfindungsgemäß ist vorgesehen, daß die erste und dritte Linsengruppe bei zueinander gleichbleibendem Abstand L2 gemeinsam verschiebbar sind, wobei sich der zwischen erster Linsengruppe und Objektebene 0 gemessene Abstand $L1^+ D1_{aktuell}$ um den Betrag $D1_{aktuell}=0...D1_{max}$ ändert, während der Abstand $D2_{aktuell}$ zwischen der zweiten Linsengruppe und der Objektebene 0 einer zwangsgeführten nichtlinearen Änderung unterworfen wird.

Hierbei ist die Bewegung der zweiten Linsengruppe in einer geschlossenen Formel beschreibbar und kann durch einfache Antriebsmittel eingeleitet werden. Das wird erfüllt durch die zwangsweise Bewegung der zweiten Linsengruppe entlang der Funktionskurve der Kosinusfunktion in Abhängigkeit von der Bewegung der ersten und dritten Linse.

Erfindungsgemäß sind die Parameter für die Bewegung der zweiten Linsengruppe angegeben, die der Beziehung $D2_{aktuell}=D2_{mittel}+C1*cos(C2*D1_{aktuell}+C3)$ unterworfen ist, in der C1,C2 und C3 Führungswerte sind. Auf diese Weise wird eine sehr gute Approximation des exakten mechanischer Ausgleichs der Fokuslage erzielt.

In verschiedenen Ausgestaltungen ist das Prinzip des erfindungsgemäßen Varioobjektivs für Übertragungslängen im Bereich von 160mm bis 500mm wie in den Unteransprüchen 4 bis 11 im Detail angegeben ausgeführt.

Dabei sind für die Übertragungslängen L gleich 160mm, 200mm, 240mm, 280mm, 320mm, 380mm, 450mm und 500mm die optischen Komponenten sowie die jeweils maximal mögliche Verschiebeweite $D1_{max}$ genannt. Die Kopplung zwischen der Verschiebeweite $D1_{aktuell}=0...D1_{max}$ und der Änderung des Abstandes $D2_{aktuell}$ ergibt sich unter Einsetzung der zu jeder Übertragungslänge angegebenen Werte $D2_{mittel}$,C1,C2 und C3 aus der oben genannten Beziehung. Der Einstellwert für den exakten mechanischen Ausgleich weicht geringfügig von dem analytisch beschriebenen ab.

Die Verschiebebewegungen der drei Linsengruppen können durch unterschiedliche Mittel ausgelöst werden. So ist es z.B. denkbar, jede der drei Linsengruppen separat über Schrittmotoren anzusteuern, wobei die Verstellgeschwindigkeiten so vorzugeben sind, daß die vorgenannten Bedingungen eingehalten werden.

Vorteilhaft ist dagegen aber auch die Verwendung von Kurvengetrieben, durch welche die Relativbewegungen zwischen erster und dritter Linsengruppe einerseits und der zweiten Linsengruppe andererseits zwangsgesteuert werden.

Diesbezüglich kann vorgesehen sein, daß die erste und dritte Linsengruppe fest auf einer gemeinsamen, in axialer Richtung verschieblichen Halterung angeordnet sind, mit der die zweite Linsengruppe über ein Kurvengetriebe gekoppelt ist. Die Kurvengetriebe sind so gestaltet, daß ein mit der Halterung fest verbundener Führungsstift in eine erste Steuerkurve und ein mit der zweiten Linsengruppe fest verbundener Führungsstift in eine zweite Steuerkurve eingreift und in Abhängigkeit vom Drehwinkel der Steuerkurven um die optische Achse die Abstände $D1_{aktuell}$ und $D2_{aktuell}$ veränderlich sind.

In alternativen Ausgestaltungen können die Steuerkurven in der Wandung eines um die optische Achse verdrehbaren Kurvenrohres oder am Außenumfang einer um die optische Achse verdrehbaren Kurventrommel ausgebildet sein.

Es läßt sich ein verhältnismäßig einfacher mechanischer Aufbau erzielen, wenn die Halterung als Hülse ausgebildet ist, in der die erste und zweite Linsengruppe gegen Verdrehung um die optische Achse gesichert aufgenommen sind und die Außenwandung der Hülse dabei paßgenau in der Innenfläche eines Kurvenrohres gleitet.

Bei Drehung des Kurvenrohres um die optische Achse werden die in die Steuerkurven eingreifenden Führungsstifte in axialer Richtung mitgenommen und dabei die Bewegung der Führungsstifte als Verschiebebewegung auf die erste und dritte Linsengruppe bzw. auf die zweite Linsengruppe übertragen. Die Abweichung der Verschiebeweite $D1_{aktuell}$ der ersten und dritten Linsengruppe von der Verschiebeweite $D2_{aktuell}$ der zweiten Linsengruppe ist durch die Kurvenform bzw. durch die Neigung der Steuerkurven relativ zur Umfangsrichtung der Verdrehung vorgegeben.

Die Drehbewegung des Kurvenrohres bzw. der Kurventrommel kann manuell oder auch mit einem elektromechanischen Antrieb ausgelöst werden. Dagegen sind alternative Ausgestaltung des Verstellantriebes beispielsweise dahingehend denkbar, als die Halterung mit einer Zahnstange versehen ist, in die ein Ritzel eingreift, die zweite Linsengruppe über einen Tasthebel mit einer Exzenterkurve in Verbindung steht und Ritzel und Exzenterkurve auf einer gemeinsamen Welle angeordnet sind.

Bei Drehung der Welle wird die Drehbewegung des Ritzels auf die Zahnstange übertragen und dabei in eine Längsbewegung der ersten und dritten Linsengruppe gewandelt. Über den Tasthebel wird gleichzeitig die Drehung der Welle in eine Verschiebebewegung der zweiten Linsengruppe gewandelt, wobei die Verschiebeweite durch die Form der Exzenterkurve vorgegeben ist.

In einer anderen ebenfalls vorteilhaften Ausgestaltung kann an der Halterung eine im wesentlichen parallel zur optischen Achse ausgerichtete Kurvenfläche vorgesehen sein, deren Kontur von einem Winkelhebel, der mit der zweiten Linsengruppe in Verbindung steht, abgetastet wird. Bei einer axialen Verschiebung der Halterung bzw. der Kurve wird der Winkelhebel in Abhängigkeit von der Kurvenform ausgelenkt und überträgt diese Bewegung auf die zweite Linsengruppe.

Die Erfindung soll nachfolgend anhand eines Ausführungsbeispieles näher erläutert werden. In den zugehörigen Zeichnungen zeigen

Fig.1    ein Schema der Abstandsänderung in Abhängigkeit von der Zeit
Fig.2    das Prinzip der Bewegungssteuerung mit einem Kurvenrohr
Fig.3    das Prinzip der Bewegungssteuerung mit einer Kurventrommel

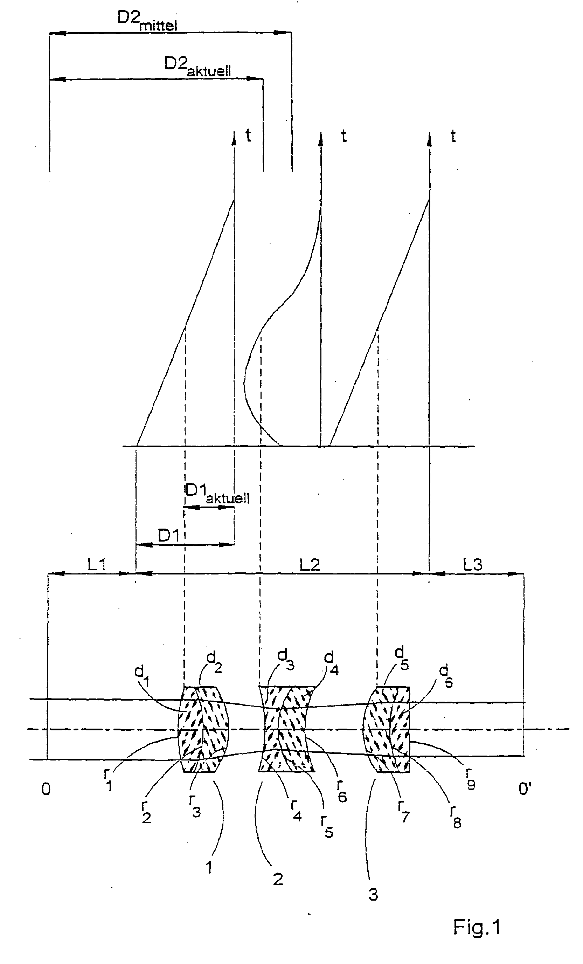

Fig.1 zeigt die Abstände L1, L2 und L3 der Linsengruppen 1, 2 und 3 zueinander sowie deren Abstände zur Objektebene 0 bzw. zur Bildebene 0'. Des weiteren ist die Verschiebeweite $D1_{max}$ der Linsengruppen 1 und 2 in Abhängigkeit von der Zeit sowie die dazu nichtlineare Verschiebung der Linsengruppe 2 dargestellt.
Die Beziehung zwischen $D1_{aktuell}$ und $D2_{aktuell}$ ergibt sich aus der Beziehung

- $D2_{aktuell}=D2_{mittel}+C1*\cos(C2*D1_{aktuell}+C3)$.

Bei einer Übertragungslänge von beispielsweise L=L1+L2+L3 gleich 160mm gelten für die Linsengruppen 1,2 und 3 folgende Bedingungen:

| Linsengruppe | Dicken | Radien | Glasart | Brennweite |
|---|---|---|---|---|
| 1 | d1=3,50 d2=1,50 | r1=39,63 r2=-7,76 r3=-14,55 | N-SSK8 N-SF6 | 21,69 |
| 2 | d3=2,00 d4=3,00 | r4=-11,56 r5=4,40 r6=8,11 | N-FK5 N-BASF2 | -11,60 |
| 3 | d5=1,50 d6=3,50 | r7=11,56 r8=3,21 r9=U | N-BASF2 N-SSK8 | 22,90 |

bei folgenden Abständen:

L1=47,35; L2=42,39; L3=60,26; $D1_{max}$=19,47;
$D2_{mittel}$=74,933; C1=6,32; C2=4,211 und C3=82.

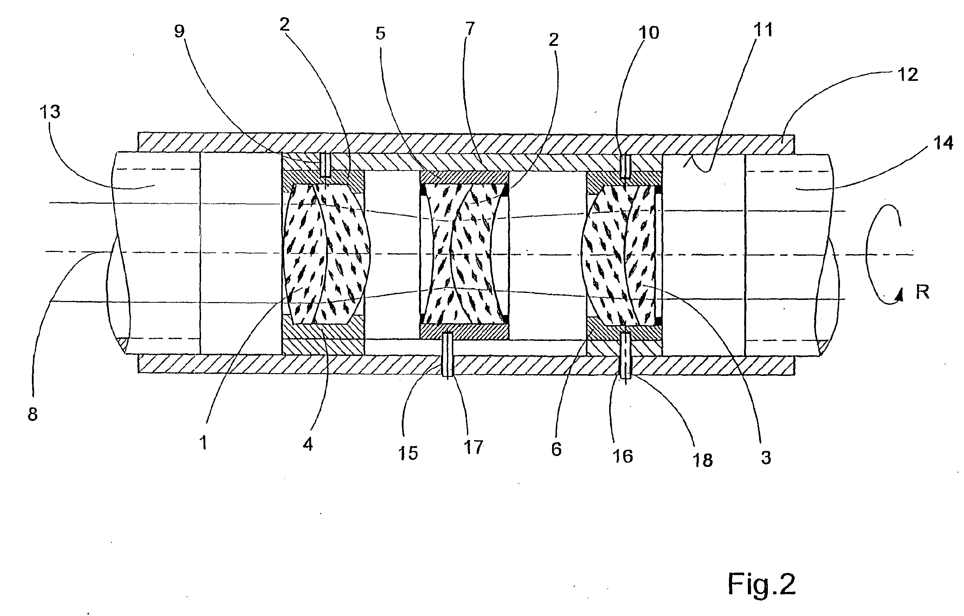

In Fig.2 ist eine Ausführungsform des erfindungsgemäßen Varioobjektivs skizziert. Hier sind die Linsengruppen 1,2,3 jeweils von Fassungen 4,5,6 umschlossen, die beispielhaft mit zylindrischen Außenflächen gleicher Durchmesser versehen und in einer gemeinsamen Hülse 7 aufgenommen sind. Die Hülse 7 ist wie die übrigen dargestellten Baugruppen auch in einem Schnitt durch die optische Achse 8 gezeichnet.
Die Positionen der Linsengruppen 1 und 2 innerhalb der Hülse 7 sind durch Stifte 9 und 10 fixiert. Dagegen ist die Linsengruppe 2 innerhalb der Hülse 7 in Richtung der optischen Achse 8 gleitend verschiebbar, wodurch sich ihr Abstand zu den Linsengruppen 1,2 ändern kann. Alle drei Linsengruppen 1,2,3 wie auch die Hülse 7 sind gegen Verdrehung um die optische Achse 8 gesichert (zeichnerisch nicht dargestellt).
Die Hülse 7 ist mit ihrer Außenfläche an der Innenwandung 11 eines Kurvenrohres 12 gleitend gelagert und dadurch in Richtung der optischen Achse 8 geradlinig verschiebbar. Dabei wird die Verschiebebewegung der Hülse 7 über die Stifte 9,10 auf die Linsengruppen 1,3 übertragen. Das Kurvenrohr 12 ist auf gestellfesten Lagern 13 und 14 in Richtung R und auch entgegengesetzt zur Richtung R um die optische Achse 8 drehbar.
In den Mantel des Kurvenrohres 12 sind als Führungsschlitze 15,16 ausgebildete Steuerkurven eingearbeitet, in welche Führungsstifte 17,18 eingreifen, von denen der Führungsstift 17 mit der Linsengruppe 2 und der Führungsstift 18 über die Hülse 7 mit den Linsengruppen 1,3 fest verbunden ist.
Soll nun die Vergrößerung des Varioobjektivs verändert werden, wird durch Drehung des Kurvenrohres 12 um die optische Achse 8 eine Abstandsänderungen der Linsengruppen 1,3 zur Objektebene 0 bzw. zur Bildebene 0' veranlaßt. Die Drehbewegung des Kurvenrohres 12 wird wegen der vorzugsweise kontinuierlichen Neigung des Führungsschlitzes 16 gegen die Drehrichtung über den Führungsstift 18 linear auf die Linsengruppen 1,3 übertragen, was zur gewünschten Abstandsänderung $D1_{aktuell}$=0... $D1_{max}$ führt.
Die Drehbewegung des Kurvenrohres 12 wird gleichzeitig über den Führungsstift 17 auf die Linsengruppe 2 übertragen. Allerdings ist der Führungsschlitz 15 nicht (wie der Führungsschlitz 16) kontinuierlichen gegen die Drehrichtung geneigt, sondern so, daß sich in Abhängigkeit vom Drehwinkel die gewünschte Abstandsänderung $D2_{aktuell}$ nach der oben angegebenen Funktion ergibt.
Die Abstandsänderung $D2_{aktuell}$ erfolgt also, anders als die Abstandsänderung $D1_{aktuell}$, nichtlinear zum Dreh-

winkel, wobei die Linsengruppe 2 zwangsgeführt in eine Position gestellt wird, in der die mit der Änderung der Vergrößerung einhergehende Änderung der Fokuslage ausgeglichen ist und das Bild unverändert scharf abgebildet bleibt.

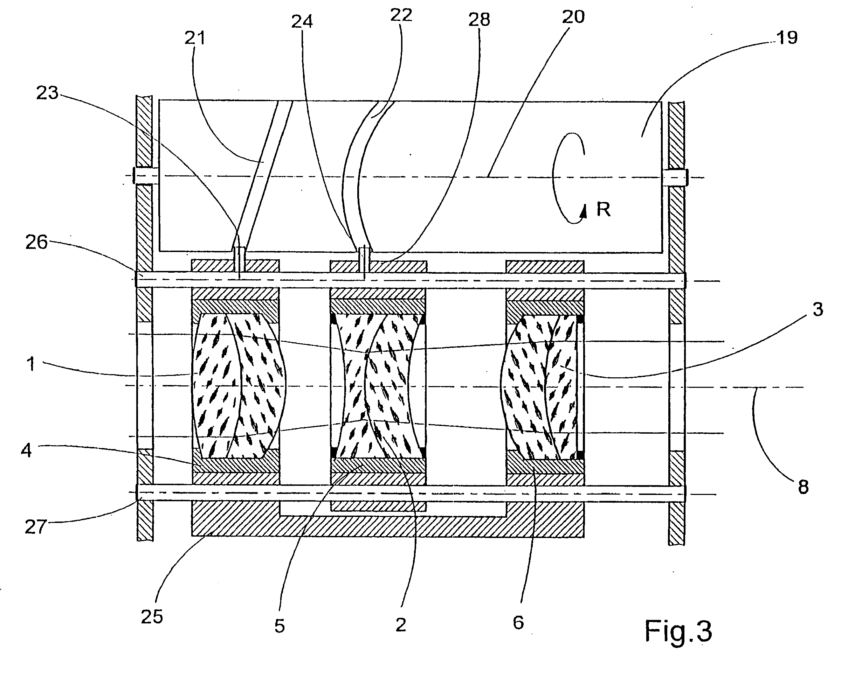

Fig.3 zeigt eine Ausführungsform der Erfindung, bei der anstelle eines Kurvenrohres eine Kurventrommel 19 vorgesehen ist. Diese ist um eine zur optischen Achse 8 ausgerichtete Drehachse 20 drehbar gelagert. Die Kurventrommel 19 weist an ihrem äußeren Umfang zwei als Führungsschlitze 21,22 ausgebildete Steuerkurven auf, in welche Führungsstifte 23,24 eingreifen.

Die Linsengruppen 1,3 sind mit ihren Fassungen 4,6 in einem Schlitten 25 aufgenommen, der auf zwei gestellfesten Geradführungen 26,27 gleitend gelagert ist. Wie in der vorherbeschriebenen Ausgestaltungsvariante der Erfindung sind auch hier die Linsengruppen 1,3 bezüglich ihres Abstandes zueinander fixiert und gegen Verdrehung um die optische Achse 8 gesichert.

Die Linsengruppe 2 ist mit ihrer Fassung 5 in einem Schlitten 28 aufgenommen, der ebenfalls auf den Geradführungen 26,27 gleitend gelagert und gegen Verdrehung um die optische Achse 8 gesichert ist.

Wird die Kurventrommel 19 nun in Richtung R gedreht, bewirkt der in den Führungsschlitz 21 eingreifende Führungsstift 23 die Abstandänderung $D1_{aktuell}=0...D1_{max}$, während der in den Führungsschlitz 22 eingreifende Führungsstift 24 für die Abstandänderung $D2_{aktuell}$ sorgt.

In Fig.3 sind die unterschiedlichen Neigungen der Führungsschlitze 21,22 zur Drehrichtung zu erkennen. Die Steuerkurven können in Bezug aufeinander so geformt sein, daß die Bewegung der Linsengruppen 1,3 einerseits und der Linsengruppe 2 andererseits mit unterschiedlicher Geschwindigkeit in derselben Bewegungsrichtung oder aber auch, zumindest abschnittsweise, gegenläufig erfolgt. Die Verschiebeweiten $D1_{aktuell}$ und $D2_{aktuell}$ sind dabei stets durch die Neigungen der zugeordneten Steuerkurven zur Drehrichtung vorgegeben.

## Bezugszeichenliste

| | |
|---|---|
| 1, 2, 3 | Linsengruppen |
| 4, 5, 6 | Fassungen |
| 7 | Hülse |
| 8 | optische Achse |
| 9, 10 | Stifte |
| 11 | Innenwandung |
| 12 | Kurvenrohr |
| 13, 14 | Lager |
| 15, 16 | Führungsschlitze |
| 17, 18 | Führungsstifte |
| 19 | Kurventrommel |
| 20 | Drehachse |
| 21, 22 | Führungsschlitze |
| 23, 24 | Führungsstifte |
| 25 | Schlitten |
| 26, 27 | Geradführungen |
| 28 | Schlitten |
| | |
| R | Drehrichtung |

## Patentansprüche

1. Varioobjektiv mit endlicher Übertragungslänge L von der Objektebene 0 zur Bildebene 0', umfassend drei axial verschiebbare Linsengruppen (1,2,3), von denen in Abbildungsrichtung aufeinander folgend eine erste Linsengruppe (1) positive Brechkraft, eine zweite Linsengruppe (2) negative Brechkraft und die dritte Linsengruppe (3) positive Brechkraft hat, wobei die erste und dritte Linsengruppe (1,3) bei zueinander gleichbleibendem Abstand L2 gemeinsam verschiebbar sind, und wobei sich der zwischen erster Linsengruppe (1) und Objektebene 0 gemessene Abstand $L1+D1_{aktuell}$ um den Betrag $D1_{aktuell}=0...D1_{max}$ ändert, während der Abstand $D2_{aktuell}$ zwischen der zweiten Linsengruppe (2) und der Objektebene 0 einer zwangsgeführten nichtlinearen Änderung unterworfen ist, **dadurch gekennzeichnet, daß** der zwangsgeführten nichtlinearen Änderung die Beziehung

$$D2_{aktuell}=D2_{mittel}+C1*cos(C2*D1_{aktuell}+C3)$$

zugrunde liegt, in der C1,C2 und C3 die Nichtlinearität charakterisierende Führungswerte sind.

2. Varioobjektiv nach Anspruch 1, **gekennzeichnet durch** eine Übertragungslänge L=L1+L2+L3 von 160mm bei folgenden Bedingungen für die Linsengruppen (1,2,3)

| Linsengruppe | Dicken | Radien | Glasart | Brennweite |
|---|---|---|---|---|
| 1 | d1=3,50<br>d2=1,50 | r1=39,63<br>r2=-7,76<br>r3=-14,55 | N-SSK8<br>N-SF6 | 21,69 |
| 2 | d3=2,00<br>d4=3,00 | r4=-11,56<br>r5=4,40<br>r6=8,11 | N-FK5<br>N-BASF2 | -11,60 |
| 3 | d5=1,50<br>d6=3,50 | r7=11,56<br>r8=3,21<br>r9=U | N-BASF2<br>N-SSK8 | 22,90 |

und folgenden Abständen:

L1=47,35; L2=42,39; L3=60,26; $D1_{max}$=19,47;
$D2_{mittel}$=74,933; C1=6, 32; C2=4,211; C3=82

3. Varioobjektiv nach Anspruch 1, **gekennzeichnet durch** eine Übertragungslänge L=L1+L2+L3 von 200mm bei folgenden Bedingungen für die Linsengruppen (1,2,3):

| Linsengruppe | Dicken | Radien | Glasart | Brennweite |
|---|---|---|---|---|
| 1 | D1=3,50<br>d2=1,50 | r1=41,85<br>r2=-10,34<br>r3=-20,42 | N-SSK8<br>N-SF6 | 28,18 |
| 2 | d3=2,00<br>d4=3,00 | r4=-17,57<br>r5=6,33<br>r6=11,59 | N-FK5<br>N-BASF2 | -17,21 |
| 3 | d5=1,50<br>d6=3,50 | r7=16,84<br>r8=5,06<br>r9=U | N-BASF2<br>N-SSK8 | 32,74 |

und folgenden Abständen:

L1=57,92; L2=49,00; L3=83,08; $D1_{max}$=20,12;
$D2_{mittel}$=85,970; C1=1,33; C2=8,56; C3=36,4

4. Varioobjektiv nach Anspruch 1, **gekennzeichnet durch** eine Übertragungslänge L=L1+L2+L3 von 240mm bei folgenden Bedingungen für die Linsengruppen (1,2,3):

| Linsengruppe | Dicken | Radien | Glasart | Brennweite |
|---|---|---|---|---|
| 1 | d1=3,50<br>d2=1,50 | r1=42,76<br>r2=-13,31 | N-SSK8<br>N-SF6 | 34,32 |

(fortgesetzt)

| Linsengruppe | Dicken | Radien | Glasart | Brennweite |
|---|---|---|---|---|
| | | r3=-27,51 | | |
| 2 | d3=2,00<br>d4=3,00 | r4=-23,10<br>r5=7,84<br>r6=14,16 | N-FK5<br>N-BASF2 | -21,75 |
| 3 | d5=1,50<br>d6=3,50 | r7=21,43<br>r8=7,07<br>r9=U | N-BASF2<br>N-SSK8 | 40,66 |

und folgenden Abständen:

L1=70,24; L2=57,54; L3=102,22; $D1_{max}$=23,97;
$D2_{mittel}$=102,27; C1=0,95; C2=9, 97; C3=10

5. Varioobjektiv nach Anspruch 1, **gekennzeichnet durch** eine Übertragungslänge L=L1+L2+L3 von 280mm bei folgenden Bedingungen für die Linsengruppen (1,2,3):

| Linsengruppe | Dicken | Radien | Glasart | Brennweite |
|---|---|---|---|---|
| 1 | d1=3,50<br>d2=1,50 | r1=45,91<br>r2=-16,17<br>r3=-34,52 | N-SSK8<br>N-SF6 | 40,31 |
| 2 | d3=2,00<br>d4=3,00 | r4=-27,71<br>r5=9,17<br>r6=16,59 | N-FK5<br>N-BASF2 | -25,85 |
| 3 | d5=1,50<br>d6=3,50 | r7=25,45<br>r8=8,67<br>r9=U | N-BASF2<br>N-SSK8 | 47,95 |

und folgenden Abständen:

L1=82, 79; L2=66, 36; L3=120, 85; $D1_{max}$=28, 03;
$D2_{mittel}$=119, 434; C1=0,96; C2=9, 17; C3=-5,3

6. Varioobjektiv nach Anspruch 1, **gekennzeichnet durch** eine Übertragungslänge L=L1+L2+L3 von 320mm bei folgenden Bedingungen für die Linsengruppen (1,2,3):

| Linsengruppe | Dicken | Radien | Glasart | Brennweite |
|---|---|---|---|---|
| 1 | d1=3,50<br>d2=1,50 | r1=50,94<br>r2=-19,46<br>r3=-42,38 | N-SSK8<br>N-SF6 | 47,15 |
| 2 | d3=2,00<br>d4=3,00 | r4=-31,51<br>r5=10,09<br>r6=18,24 | N-FK5<br>N-BASF2 | -28,92 |
| 3 | d5=1,50<br>d6=3,50 | r7=28,37<br>r8=9,63<br>r9=U | N-BASF2<br>N-SSK8 | 53,53 |

und folgenden Abständen:

L1=97,35; L2=78,13; L3=134,52; $D1_{max}$=31,89;
$D2_{mittel}$=14.2,0.06; C1=1,08; C2=7,82; C3=1,9

**7.** Varioobjektiv nach Anspruch 1, **gekennzeichnet durch** eine Übertragungslänge L=L1+L2+L3 von 380mm bei folgenden Bedingungen für die Linsengruppen (1,2,3):

| Linsengruppe | Dicken | Radien | Glasart | Brennweite |
|---|---|---|---|---|
| 1 | d1=3,50 d2=1,50 | r1=62,65 r2=-19,95 r3=-40,97 | N-SSK8 N-SF6 | 50,27 |
| 2 | d3=2,00 d4=3,00 | r4=-29,64 r5=11,22 r6=21,76 | N-FK5 N-BASF2 | -31,69 |
| 3 | d5=1,50 d6=3,50 | r7=35,23 r8=11,80 r9=U | N-BASF2 N-SSK8 | 66,78 |

und folgenden Abständen:

L1=103,00; L2=96,97; L3=170,03; $D1_{max}$=36,00;
$D2_{mittel}$=150,472; C1=1,49; C2=6,48; C3=11,4

**8.** Varioobjektiv nach Anspruch 1, **gekennzeichnet durch** eine Übertragungslänge L=L1+L2+L3 von 450mm bei folgenden Bedingungen für die Linsengruppen (1,2,3):

| Linsen gruppe | Dicken | Radien | Glasart | Brennweite |
|---|---|---|---|---|
| 1 | d1=3,50 d2=1,50 | r1=57,73 r2=-20,42 r3=-43,03 | N-SSK8 N-SF6 | 50,02 |
| 2 | d3=2,00 d4=3,00 | r4=-31,89 r5=11,55 r6=21,68 | N-FK5 N-BASF2 | -32,34 |
| 3 | d5=1,50 d6=3,50 | r7=43,63 r8=14,66 r9=U | N-BASF2 N-SSK8 | 82,71 |

und folgenden Abständen:

L1=102,98; L2=119,71; L3=217,31; $D1_{max}$=39,27;
$D2_{mittel}$=149,889; C1=2,64; C2=4,79; C3=32

**9.** Varioobjektiv nach Anspruch 1, **gekennzeichnet durch** eine Übertragungslänge L=L1+L2+L3 von 500mm bei folgenden Bedingungen für die Linsengruppen (1,2,3):

| Linsengruppe | Dicken | Radien | Glasart | Brennweite |
|---|---|---|---|---|
| 1 | d1=3,50 d2=1,50 | r1=59,05 r2=-20,39 r3=-42,99 | N-SSK8 N-SF6 | 50,51 |
| 2 | d3=2,00 d4=3,00 | r4=-30,94 r5=11,24 | N-FK5 N-BASF2 | -31,69 |

(fortgesetzt)

| Linsengruppe | Dicken | Radien | Glasart | Brennweite |
|---|---|---|---|---|
| | | r6=21,27 | | |
| 3 | d5=1,50<br>d6=3,50 | r7=47,85<br>r8=16,23<br>r9=U | N-BASF2<br>N-SSK8 | 90,51 |

und folgenden Abständen:

L1=107,22; L2=134,52; L3=248,26; $D1_{max}$=43,23;
$D2_{mittel}$=157, 615; C1=5,74; C2=3,09; C3=54,6

**10.** Varioobjektiv nach einem der vorgenannten Ansprüche, **dadurch gekennzeichnet, daß** die Linsengruppen (1,2,3) mit gesondert ansteuerbaren Stellantrieben, bevorzugt mit Schrittmotoren, gekoppelt sind.

**11.** Varioobjektiv nach einem der Ansprüche 2 bis 9, **dadurch gekennzeichnet, daß** die erste und dritte Linsengruppe (1,3) fest auf einer gemeinsamen, axial verschieblichen Halterung angeordnet und mit der zweiten Linsengruppe (2) über ein Kurvengetriebe gekoppelt sind, bei dem ein mit der Halterung fest verbundener Führungsstift (18,23) in eine erste Führungskurve (16,21) und ein mit der Linsengruppe (2) fest verbundener Führungsstift (17,24) in eine zweite Führungskurve (15,22) eingreift und in Abhängigkeit von der Drehung der Führungskurven (15,22) um die optische Achse (8) und von den Neigungen der Führungskurven (15,22) gegen die Drehrichtung R die Abstände $D1_{aktuell}$ und $D2_{aktuell}$ veränderlich sind.

**12.** Varioobjektiv nach Anspruch 11 **dadurch gekennzeichnet, daß** die Führungskurven (15,22) in der Wandung eines um die optische Achse (8) verdrehbaren Kurvenrohres (12) ausgebildet sind.

**13.** Varioobjektiv nach Anspruch 11 **dadurch gekennzeichnet, daß** die Führungskurven (15,22) am Außenumfang einer verdrehbaren Kurventrommel (19) ausgebildet sind.

**14.** Varioobjektiv nach einem der Ansprüche 1 bis 13, **dadurch gekennzeichnet, daß** die Übertragungslänge L=L1+L2+L3 der Bedingung 50≤L≤1000 genügt.

**15.** Varioobjektiv nach einem der Ansprüche 1 bis 14, **dadurch gekennzeichnet, daß** das Vergrößerungsverhältnis V=β'/β'' der Bedingung 2≤V≤6 genügt mit β' der Vergrößerung in der Endlage $D1_{aktuell}$=$D1_{max}$ und β'' der Vergrößerung in der Endlage $D1_{aktuell}$=0.

**16.** Varioobjektiv nach einem der Ansprüche 1 bis 15, **dadurch gekennzeichnet, daß** Objektebene und Bildebene vertauscht sind.

**Claims**

**1.** Variable objective having finite transmission length L from the object plane 0 to the image plane 0', comprising three axially displaceable lens groups (1, 2, 3) of which, successively in the imaging direction, a first lens group (1) has positive refractive power, a second lens group (2) has negative refractive power, and the third lens group (3) has positive refractive power, wherein the first and third lens groups (1, 3) can be jointly displaced while maintaining the same mutual distance L2, and wherein the distance L1+$D1_{actual}$ measured between the first lens group (1) and object plane 0 changes by the amount $D1_{actual}$=0...$D1_{max}$, while the distance $D2_{actual}$ between the second lens group (2) and the object plane 0 is subjected to a positively-guided non-linear change, **characterised in that** the positively-guided non-linear change is based on the following relationship

$$D2_{actual}=D2_{average}+C1*\cos(C2*D1_{actual}+C3)$$

in which C1, C2 and C3 are the guide values characterising the non-linearity.

2. Variable objective as claimed in claim 1, **characterised by** a transmission length L=L1+L2+L3 of 160mm with the following conditions for the lens groups (1, 2, 3)

| Lens group | Thicknesses | Radii | Glass type | Focal length |
|---|---|---|---|---|
| 1 | d1=3.50<br>d2=1.50 | r1=39.63<br>r2=-7.76<br>r3=-14.55 | N-SSK8<br>N-SF6 | 21.69 |
| 2 | d3=2.00<br>d4=3.00 | r4=-11.56<br>r5=4.40<br>r6=8.11 | N-FK5<br>N-BASF2 | -11.60 |
| 3 | d5=1.50<br>d6=3.50 | r7=11.56<br>r8=3.21<br>r9=U | N-BASF2<br>N-SSK8 | 22.90 |

and the following distances:

L1=47.35; L2=42.39; L3=60.26; $D1_{max}$=19.47;
$D2_{average}$=74.933; C1=6.32; C2=4.211; C3=82.

3. Variable objective as claimed in claim 1, **characterised by** a transmission length L=L1+L2+L3 of 200mm with the following conditions for the lens groups (1, 2, 3):

| Lens group | Thicknesses | Radii | Glass type | Focal length |
|---|---|---|---|---|
| 1 | D1=3.50<br>d2=1.50 | r1=41.85<br>r2=10.34<br>r3=-20.42 | N-SSK8<br>N-SF6 | 28.18 |
| 2 | d3=2.00<br>d4=3.00 | r4=-17.57<br>r5=6.33<br>r6=11.59 | N-FK5<br>N-BASF2 | -17.21 |
| 3 | d5=1.50<br>d6=3.50 | r7=16.84<br>r8=5.06<br>r9=U | N-BASF2<br>N-SSK8 | 32.74 |

and the following distances:

L1=57.92; L2=49.00; L3=83.08; $D1_{max}$=20.12;
$D2_{average}$=85.970; C1=1.33; C2=8.56; C3=36.4.

4. Variable objective as claimed in claim 1, **characterised by** a transmission length L=L1+L2+L3 of 240mm with the following conditions for the lens groups (1, 2, 3):

| Lens group | Thicknesses | Radii | Glass type | Focal length |
|---|---|---|---|---|
| I | d1=3.50<br>d2=1.50 | r1=42.76<br>r2=-13.31<br>r3=-27.51 | N-SSK8<br>N-SF6 | 34.32 |
| 2 | d3=2.00<br>d4=3.00 | r4=-23.10<br>r5=7.84<br>r6=14.16 | N-FK5<br>N-BASF2 | -21.75 |

(continued)

| Lens group | Thicknesses | Radii | Glass type | Focal length |
|---|---|---|---|---|
| 3 | d5=1.50<br>d6=3.50 | r7=21.43<br>r8=7.07<br>r9=U | N-BASF2<br>N-SSK8 | 40.66 |

and the following distances:

L1=70.24; L2=57.54; L3=102.22; $D1_{max}$=23.97;
$D2_{average}$=102.27; C1=0.95; C2=9.97; C3=10.

**5.** Variable objective as claimed in claim 1, **characterised by** a transmission length L=L1+L2+L3 of 280mm with the following conditions for the lens groups (1, 2, 3):

| Lens group | Thicknesses | Radii | Glass type | Focal length |
|---|---|---|---|---|
| 1 | d1=3.50<br>d2=1.50 | r1=45.91<br>r2=-16.17<br>r3=-34.52 | N-SSK8<br>N-SF6 | 40.31 |
| 2 | d3=2.00<br>d4=3.00 | r4=-27.71<br>r5=9.17<br>r6=16.59 | N-FK5<br>N-BASF2 | -25.85 |
| 3 | d5=1.50<br>d6=3.50 | r7=25.45<br>r8=8.67<br>r9=U | N-BASF2<br>N-SSK8 | 47.95 |

and the following distances:

L1=82.79; L2=66.36; L3=120.85; $D1_{max}$=28.03;
$D2_{average}$=119.434; C1=0.96; C2=9.17; C3=-5.3.

**6.** Variable objective as claimed in claim 1, **characterised by** a transmission length L=L1+L2+L3 of 320mm with the following conditions for the lens groups (1, 2, 3):

| Lens group | Thicknesses | Radii | Glass type | Focal length |
|---|---|---|---|---|
| 1 | d1=3.50<br>d2=1.50 | r1=50.94<br>r2=-19.46<br>r3=-42.38 | N-SSK8<br>N-SF6 | 47.15 |
| 2 | d3=2.00<br>d4=3.00 | r4=-31.51<br>r5=10.09<br>r6=18.24 | N-FK5<br>N-BASF2 | -28.92 |
| 3 | d5=1.50<br>d6=3.50 | r7=28.37<br>r8=9.63<br>r9=U | N-BASF2<br>N-SSK8 | 53.53 |

and the following distances:

L1=97.35; L2=78.13; L3=134.52; $D1_{max}$=31.89;
$D2_{average}$=142.006; C1=1.08; C2=7.82; C3=1.9.

**7.** Variable objective as claimed in claim 1, **characterised by** a transmission length L=L1+L2+L3 of 380mm with the following conditions for the lens groups (1, 2, 3):

| Lens group | Thicknesses | Radii | Glass type | Focal length |
|---|---|---|---|---|
| 1 | d1=3.50<br>d2=1.50 | r1=62.65<br>r2=-19.95<br>r3=-40.97 | N-SSK8<br>N-SF6 | 50.27 |
| 2 | d3=2.00<br>d4=3.00 | r4=-29.64<br>r5=11.22<br>r6=21.76 | N-FK5<br>N-BASF2 | -31.69 |
| 3 | d5=1.50<br>d6=3.50 | r7=35.23<br>r8=11.80<br>r9=U | N-BASF2<br>N-SSK8 | 66.78 |

and the following distances:

L1=103.00; L2=96.97; L3=170.03; $D1_{max}$=36.00;
$D2_{average}$=150.472; C1=1.49; C2=6.48; C3=11.4.

8. Variable objective as claimed in claim 1, **characterised by** a transmission length L=L1+L2+L3 of 450mm with the following conditions for the lens groups (1, 2, 3):

| Lens group | Thicknesses | Radii | Glass type | Focal length |
|---|---|---|---|---|
| 1 | d1=3.50<br>d2=1.50 | r1=57.73<br>r2=-20.42<br>r3=-43.03 | N-SSK8<br>N-SF6 | 50.02 |
| 2 | d3=2.00<br>d4=3.00 | r4=-31.89<br>r5=11.55<br>r6=21.68 | N-FK5<br>N-BASF2 | -32.34 |
| 3 | d5=1.50<br>d6=3.50 | r7=43.63<br>r8=14.66<br>r9=U | N-BASF2<br>N-SSK8 | 82.71 |

and the following distances:

L1=102.98; L2=119.71; L3=217.31; $D1_{max}$=39.27;
$D2_{average}$=149.889; C1=2.64; C2=4.79; C3=32.

9. Variable objective as claimed in claim 1, **characterised by** a transmission length L=L1+L2+L3 of 500mm with the following conditions for the lens groups (1, 2, 3):

| Lens group | Thicknesses | Radii | Glass type | Focal length |
|---|---|---|---|---|
| 1 | d1=3.50<br>d2=1.50 | r1=59.05<br>r2=-20.39<br>r3=-42.99 | N-SSK8<br>N-SF6 | 50.51 |
| 2 | d3=2.00<br>d4=3.00 | r4=-30.94<br>r5=11.24<br>r6=21.27 | N-FK5<br>N-BASF2 | -31.69 |
| 3 | d5=1.50<br>d6=3.50 | r7=47.85<br>r8=16.23<br>r9=U | N-BASF2<br>N-SSK8 | 90.51 |

and the following distances:

L1=107.22; L2=134.52; L3=248.26; $D1_{max}$=43.23;
$D2_{average}$=157.615; C1=5.74; C2=3.09; C3=54.6.

**10.** Variable objective as claimed in any one of the preceding claims, **characterised in that** the lens groups (1, 2, 3) are coupled to separately controllable adjusting drives, preferably stepper motors.

**11.** Variable objective as claimed in any one of claims 2 to 9, **characterised in that** the first and third lens groups (1, 3) are fixedly arranged on a common axially displaceable holder and are coupled to the second lens group (2) via a cam mechanism, wherein a guide pin (18, 23) which is fixedly connected to the holder engages into a first guide cam (16, 21) and a guide pin (17, 24) which is fixedly connected to the lens group (2) engages into a second guide cam (15, 22) and the distances $D1_{actual}$ and $D2_{actual}$ can be changed depending on the rotation of the guide cams (15, 22) about the optical axis (8) and on the inclinations of the guide cams (15, 22) relative to the rotating direction R.

**12.** Variable objective as claimed in claim 11, **characterised in that** the guide cams (15, 22) are formed in the wall of a cam tube (12) which can rotate about the optical axis (8).

**13.** Variable objective as claimed in claim 11, **characterised in that** the guide cams (15, 22) are formed on the outer periphery of a rotatable cam drum (19).

**14.** Variable objective as claimed in any one of claims 1 to 13, **characterised in that** the transmission length L=L1+L2+L3 satisfies the condition that 50≤L≤1000.

**15.** Variable objective as claimed in any one of claims 1 to 14, **characterised in that** the magnification ratio V=β'/β" satisfies the condition that 2≤V≤6, where β' is the magnification in the end position $D1_{actual}=D1_{max}$ and β" is the magnification in the end position $D1_{actual}=0$.

**16.** Variable objective as claimed in any one of claims 1 to 15, **characterised in that** the object plane and image plane are interchanged.

**Revendications**

**1.** Objectif à focale variable avec longueur de transmission L infinie allant du plan d'objet 0 au plan d'image 0', comprenant trois groupes de lentilles (1, 2, 3) coulissant axialement, dont, dans l'ordre de succession dans le sens de reproduction, un premier groupe de lentilles (1) présente une réfringence positive, un second groupe de lentilles (2) une réfringence négative et le troisième groupe de lentilles (3) une réfringence positive, le premier et le troisième groupes de lentilles (1, 3) pouvant coulisser ensemble à la distance L2 uniforme l'un par rapport à l'autre, et la distance L1 + $D1_{actuelle}$ mesurée entre le premier groupe de lentilles (1) et le plan d'objet 0 changeant du montant $D1_{actuelle}$ = 0...D1$_{max}$, alors que la distance $D2_{actuelle}$ entre le second groupe de lentilles (2) et le plan d'objet 0 est soumise à une modification non linéaire et guidée de force, **caractérisé en ce que** la relation

$$D2_{actuelle} = D2_{moyenne} + C1*\cos\,(C2*D1_{actuelle} + C3)$$

est à la base de la modification non-linéaire guidée de force, dans laquelle C1, C2 et C3 sont des valeurs de guidage qui caractérisent la non-linéarité.

**2.** Objectif à focale variable selon la revendication 1, **caractérisé par** une longueur de transmission L = L1 + L2 + L3 de 160 mm avec les conditions suivantes pour les groupes de lentilles (1, 2, 3)

| Groupe de lentilles | Epaisseurs | Rayons | Type de verre | Focale |
|---|---|---|---|---|
| 1 | d1 = 3,50<br>d2 = 1,50 | r1 = 39,63<br>r2 = -7,76 | N - SSK8<br>N - SF6 | 21,69 |

(suite)

| Groupe de lentilles | Epaisseurs | Rayons | Type de verre | Focale |
|---|---|---|---|---|
| | | r3 = 14,55 | | |
| 2 | d3 = 2,00 | r4 = -11,56 | N - FK5 | -11,60 |
| | d4 = 3,00 | r5 = 4,40 | N - BASF2 | |
| | | r6 = 8,11 | | |
| 3 | d5 = 1,50 | r7 = 11,56 | N - BASF2 | 22,90 |
| | d6 = 3,50 | r8 = 3,21 | N - SSK8 | |
| | | r9 = U | | |

et les distances suivantes :

L1 = 47,35 ; L2 = 42,39 ; L3 = 60,26 ; $D1_{max}$ = 19,47 ;
$D2_{moyenne}$ = 74,933 ; C1 = 6,32 ; C2 = 4,211 ; C3 = 82

**3.** Objectif à focale variable selon la revendication 1, **caractérisé par** une longueur de transmission L = L1 + L2 + L3 de 200 mm avec les conditions suivantes pour les groupes de lentilles (1, 2, 3) :

| Groupe de lentilles | Epaisseurs | Rayons | Type de verre | Focale |
|---|---|---|---|---|
| 1 | d1 = 3,50 | r1 = 41,85 | N - SSK8 | 28,18 |
| | d2 = 1,50 | r2 = -10,34 | N - SF6 | |
| | | r3 = 20,42 | | |
| 2 | d3 = 2,00 | r4 = -17,57 | N - FK5 | -17,21 |
| | d4 = 3,00 | r5 = 6,33 | N - BASF2 | |
| | | r6 = 11,59 | | |
| 3 | d5 = 1,50 | r7 = 16,84 | N - BASF2 | 32,74 |
| | d6 = 3,50 | r8 = 2,06 | N - SSK8 | |
| | | r9 = U | | |

et les distances suivantes :

L1 = 57,92 ; L2 = 49,00 ; L3 = 83,08 ; $D1_{max}$ = 20,12 ;
$D2_{moyenne}$ = 85,970 ; C1 = 1,33 ; C2 = 8,56 ; C3 = 36,4

**4.** Objectif à focale variable selon la revendication 1, **caractérisé par** une longueur de transmission L = L1 + L2 + L3 de 240 mm avec les conditions suivantes pour les groupes de lentilles (1, 2, 3) :

| Groupe de lentilles | Epaisseurs | Rayons | Type de verre | Focale |
|---|---|---|---|---|
| 1 | d1 = 3,50 | r1 = 42,76 | N - SSK8 | 34,32 |
| | d2 = 1,50 | r2 = -13,31 | N - SF6 | |
| | | r3 = -27,51 | | |
| 2 | d3 = 2,00 | r4 = -23,10 | N - FK5 | -21,75 |
| | d4 = 3,00 | r5 = 7,84 | N - BASF2 | |
| | | r6 = 14,16 | | |
| 3 | d5 = 1,50 | r7 = 21,43 | N - BASF2 | 40,66 |
| | d6 = 3,50 | r8 = 7,07 | N - SSK8 | |
| | | r9 = U | | |

et les distances suivantes :

$L1 = 70,24$ ; $L2 = 57,54$ ; $L3 = 102,22$ ; $D1_{max} = 23,97$ ;
$D2_{moyenne} = 102,27$ ; $C1 = 0,95$ ; $C2 = 9,97$ ; $C3 = 10$

**5.** Objectif à focale variable selon la revendication 1, **caractérisé par** une longueur de transmission $L = L1 + L2 + L3$ de 280 mm avec les conditions suivantes pour les groupes de lentilles (1, 2, 3) :

| Groupe de lentilles | Epaisseurs | Rayons | Type de verre | Focale |
|---|---|---|---|---|
| 1 | $d1 = 3,50$<br>$d2 = 1,50$ | $r1 = 45,91$<br>$r2 = -16,17$<br>$r3 = -34,52$ | N - SSK8<br>N - SF6 | 40,31 |
| 2 | $d3 = 2,00$<br>$d4 = 3,00$ | $r4 = -27,71$<br>$r5 = 9,17$<br>$r6 = 16,59$ | N - FK5<br>N - BASF2 | -25,85 |
| 3 | $d5 = 1,50$<br>$d6 = 3,50$ | $r7 = 25,45$<br>$r8 = 8,67$<br>$r9 = U$ | N - BASF2<br>N - SSK8 | 47,95 |

et les distances suivantes :

$L1 = 82,79$ ; $L2 = 66,36$ ; $L3 = 120,85$ ; $D1_{max} = 28,03$ ;
$D2_{moyenne} = 119,434$ ; $C1 = 0,96$ ; $C2 = 9,17$ ; $C3 = -5,3$

**6.** Objectif à focale variable selon la revendication 1, **caractérisé par** une longueur de transmission $L = L1 + L2 + L3$ de 320 mm avec les conditions suivantes pour les groupes de lentilles (1, 2, 3) :

| Groupe de lentilles | Epaisseurs | Rayons | Type de verre | Focale |
|---|---|---|---|---|
| 1 | $d1 = 3,50$<br>$d2 = 1,50$ | $r1 = 50,94$<br>$r2 = -19,46$<br>$r3 = -42,38$ | N - SSK8<br>N - SF6 | 47,15 |
| 2 | $d3 = 2,00$<br>$d4 = 3,00$ | $r4 = -31,51$<br>$r5 = 10,09$<br>$r6 = 18,24$ | N - FK5<br>N - BASF2 | -28,92 |
| 3 | $d5 = 1,50$<br>$d6 = 3,50$ | $r7 = 28,37$<br>$r8 = 9,63$<br>$r9 = U$ | N - BASF2<br>N - SSK8 | 53,53 |

et les distances suivantes :

$L1 = 97,35$ ; $L2 = 78,13$ ; $L3 = 134,52$ ; $D1_{max} = 31,89$ ;
$D2_{moyenne} = 142,006$ ; $C1 = 1,08$ ; $C2 = 7,82$ ; $C3 = 1,9$

**7.** Objectif à focale variable selon la revendication 1, **caractérisé par** une longueur de transmission $L = L1 + L2 + L3$ de 380 mm avec les conditions suivantes pour les groupes de lentilles (1, 2, 3) :

| Groupe de lentilles | Epaisseurs | Rayons | Type de verre | Focale |
|---|---|---|---|---|
| 1 | $d1 = 3,50$<br>$d2 = 1,50$ | $r1 = 62,65$<br>$r2 = -19,95$<br>$r3 = -40,97$ | N - SSK8<br>N - SF6 | 50,27 |
| 2 | $d3 = 2,00$<br>$d4 = 3,00$ | $r4 = -29,64$<br>$r5 = 11,22$ | N - FK5<br>N - BASF2 | -31,69 |

(suite)

| Groupe de lentilles | Epaisseurs | Rayons | Type de verre | Focale |
|---|---|---|---|---|
| | | r6 = 21,76 | | |
| 3 | d5 = 1,50<br>d6 = 3,50 | r7 = 35,23<br>r8 = 11,80<br>r9 = U | N - BASF2<br>N - SSK8 | 66,78 |

et les distances suivantes :

L1 = 103,00 ; L2 = 96, 97 ; L3 = 170,03 ; $D1_{max}$ = 36,00 ;
$D2_{moyenne}$ = 150,472 ; C1 = 1,49 ; C2 = 6,48 ; C3 = 11,4

**8.** Objectif à focale variable selon la revendication 1, **caractérisé par** une longueur de transmission L = L1 + L2 + L3 de 450 mm avec les conditions suivantes pour les groupes de lentilles (1, 2, 3) :

| Groupe de lentilles | Epaisseurs | Rayons | Type de verre | Focale |
|---|---|---|---|---|
| 1 | d1 = 3,50<br>d2 = 1,50 | r1 = 57,73<br>r2 = -20,42<br>r3 = -43,03 | N - SSK8<br>N - SF6 | 50,02 |
| 2 | d3 = 2,00<br>d4 = 3,00 | r4 = -31,89<br>r5 = 11,55<br>r6 = 21,68 | N - FK5<br>N - BASF2 | -32,34 |
| 3 | d5 = 1,50<br>d6 = 3,50 | r7 = 43,63<br>r8 = 14,66<br>r9 = U | N - BASF2<br>N - SSK8 | 82,71 |

et les distances suivantes :

L1 = 102,98 ; L2 = 119,71 ; L3 = 217,31 ; $D1_{max}$ = 39,27 ;
$D2_{moyenne}$ = 149, 889 ; C1 = 2,64 ; C2 = 4,79 ; C3 = 32

**9.** Objectif à focale variable selon la revendication 1, **caractérisé par** une longueur de transmission L = L1 + L2 + L3 de 500 mm avec les conditions suivantes pour les groupes de lentilles (1, 2, 3) :

| Groupe de lentilles | Epaisseurs | Rayons | Type de verre | Focale |
|---|---|---|---|---|
| 1 | d1 = 3,50<br>d2 = 1,50 | r1 = 59,05<br>r2 = -20,39<br>r3 = -42,99 | N - SSK8<br>N - SF6 | 50,51 |
| 2 | d3 = 2,00<br>d4 = 3,00 | r4 = -30,94<br>r5 = 11,24<br>r6 = 21,27 | N - FK5<br>N - BASF2 | -31,69 |
| 3 | d5 = 1,50<br>d6 = 3,50 | r7 = 47,85<br>r8 = 16,23<br>r9 = U | N - BASF2<br>N - SSK8 | 90,51 |

et les distances suivantes :

L1 = 107,22 ; L2 = 134,52 ; L3 = 248,26 ; $D1_{max}$ = 43,23 ;
$D2_{moyenne}$ = 157,615 ; C1 = 5,74 ; C2 = 3,09 ; C3 = 54,6

**10.** Objectif à focale variable selon l'une quelconque des revendications précédentes, **caractérisé en ce que** les groupes de lentilles (1, 2, 3) sont couplés avec des servomoteurs pouvant être activés séparément, de préférence avec des moteurs pas à pas.

**11.** Objectif à focale variable selon l'une quelconque des revendications 2 à 9, **caractérisé en ce que** le premier et le troisième groupes de lentilles (1, 3) sont disposés de façon fixe sur un support commun et coulissant axialement et sont couplés avec le second groupe de lentilles (2) au moyen d'un engrenage à came, sur lequel une broche de guidage (18, 23) reliée de façon fixe au support s'engage dans une première came de guidage (16, 21) et une broche de guidage (17, 24) reliée de façon fixe au second groupe de lentilles (2) s'engage dans une seconde came de guidage (15, 22) et les distances $D1_{actuelle}$ et $D2_{actuelle}$ sont variables en fonction de la rotation des cames de guidage (15, 22) autour de l'axe (8) optique et des inclinaisons des cames de guidage (15, 22) par rapport au sens de rotation R.

**12.** Objectif à focale variable selon la revendication 11, **caractérisé en ce que** les cames de guidage (15, 22) sont conçues dans la paroi d'un tube de came (12) pouvant tourner autour de l'axe (8) optique.

**13.** Objectif à focale variable selon la revendication 11, **caractérisé en ce que** les cames de guidage (15, 22) sont réalisées sur le pourtour extérieur d'un tambour de came (19) rotatif.

**14.** Objectif à focale variable selon l'une quelconque des revendications 1 à 13, **caractérisé en ce que** la longueur de transmission L = L1 + L2 + L3 répond à la condition $50 \leq L \leq 1000$.

**15.** Objectif à focale variable selon l'une quelconque des revendications 1 à 14, **caractérisé en ce que** le rapport d'agrandissement V = β'/β'' répond à la condition $2 \leq V \leq 6$ avec β' l'agrandissement dans la position finale $D1_{actuelle} = D1_{max}$ et β'' l'agrandissement dans la position finale $D1_{actuelle} = 0$.

**16.** Objectif à focale variable selon l'une quelconque des revendications 1 à 15, **caractérisé en ce que** le plan d'objectif et le plan d'image sont permutés.

Fig.1

Fig.2

Fig.3

EP 1 129 381 B1